# EUROPÄISCHE PATENTSCHRIFT

(11) **EP 1 069 365 B1**
(45) Veröffentlichungstag und Bekanntmachung des Hinweises auf die Patenterteilung: **29.03.2006**
(21) Anmeldenummer: 00112338.9
(22) Anmeldetag: 09.06.2000
(51) Int. Cl.: F16L 41/06, F16L 47/00

(54) **Armatur**
Fitting
Armature

(30) Priorität: 14.07.1999 DE 19932412; 29.07.1999 DE 19935668
(43) Veröffentlichungstag der Anmeldung: 17.01.2001
(73) Patentinhaber: Friatec Aktiengesellschaft, 68229 Mannheim (DE)
(72) Erfinder: Ehrhardt, Peter, 68219 Mannheim (DE); Sichler, Wolfgang, 68239 Mannheim (DE); Wilhelm, Markus, 69469 Lützelsachsen (DE)
(74) Vertreter: Schmitt, Meinrad

(56) Entgegenhaltungen:
- EP-A- 0 572 817
- DE-A- 19 500 950
- DE-A- 19 641 803
- DE-C- 3 830 395

## Beschreibung

Die Erfindung bezieht sich auf eine Armatur gemäß der im Oberbegriff des Patentanspruchs 1 angegebenen Merkmale.

Aus der DE 195 00 950 A1 ist eine derartige Armatur bekannt, deren als Spindelhülse bezeichnete Kartusche in einen Stutzen eines vorgefertigten Gehäuses eingesetzt ist, wobei mittels eines Absatzes und eines Sprengringes eine Axialsicherung der Kartusche im Stutzen vorgegeben ist. Die Kartusche ist umfangsseitig vorsprungslos zylindrisch gestaltet, und Elemente zur Drehsicherung der Kartusche im Stutzen sind nicht vorhanden. Zur Axialsicherung der Kartusche ist am freien Ende des Stutzens der Sprengring in einer Umfangsnut angeordnet. In einer ersten Ausführungsform ist das aus Metall bestehende Gehäuse einteilig mit einer Aufsatzschale ausgebildet, wobei zwischen dieser und dem Rohr eine Ausgleichsringdichtung vorgesehen ist. In einer weiteren Ausführungsform ist die Armatur zweiteilig ausgebildet mit einer Aufsatzschale aus Kunststoff, in deren Vertikalstutzen das aus Metall bestehende und die Kartusche enthaltende Spindelgehäuse dicht eingedreht ist. Diese zweiteilige Ausführungsform mit der Aufsatzschale aus Kunststoff, welche eine Elektroschweißung mit einem Kunststoffrohr ermöglicht, bedingt einen zusätzlichen Fertigungs- und Montageaufwand.

Weiterhin sind aus der DE 196 41 803 A1 und der EP 0 572 817 B1 Armaturen mit Gehäusen bekannt, welche durch Schweißen mit Rohren verbindbar sind. Das Gehäuse einer solchen Armatur und ebenso das Rohr bestehen aus einem schweißbaren Kunststoff, insbesondere aus Polyäthylen, wobei das Gehäuse in einem Sattel eine Heizwicklung zum Elektroschweißen aufweist. Das Gehäuse enthält einen Stutzen, in welchen eine Führungsbuchse aus Metall integriert und insbesondere eingegossen oder eingespritzt ist. Die Führungsbuchse weist ein Innengewinde für einen Bohrer auf, dessen Außengewinde in das Innengewinde eingreift und welche nach dem Herstellen der Verbindung der Armatur mit dem Rohr das Einbringen einer Bohrung in das Rohr ermöglicht. Des Weiteren ist mit dem Stutzen ein Abzweigstutzen zum Anschluss einer Abzweigleitung verbunden. Ferner enthält die genannte Führungsbuchse einen Ventilsitz für einen mit dem Bohrer kombinierten Ventilkörper. Die Armatur ist als kombinierte Ventil-Anbohrarmatur ausgebildet, welche zum einen das Anbohren des Rohres und zum anderen das Freigeben oder Absperren der Verbindung zwischen dem Innenraum des Rohres und dem Abzweigstutzen der angeschlossenen Abzweigleitung ermöglicht.

Ferner ist aus dem deutschen Patent DE 38 30 395 C 1 eine Armatur bekannt, welche ausschließlich als Anbohrarmatur ohne Ventilfunktion ausgebildet ist. Auch diese Anbohrarmatur enthält eine in den Stutzen des Gehäuses insbesondere durch Einspritzen integrierte Führungshülse mit Innengewinde, in welches ein Außengewinde des Bohrers eingreift.

Für derartige unterschiedlich ausgebildete Armaturen sind unterschiedliche Werkzeuge und insbesondere Spritzformen zur Herstellung des Gehäuses mit den darin integrierten Funktionselementen erforderlich. In der Praxis bestehen oftmals unterschiedliche Anforderungen, insbesondere für unterschiedliche Medien oder Dichtigkeitsanforderungen oder Druckbereiche, so daß eine große Anzahl insoweit geeigneter Armaturen gefertigt und bereitgestellt werden muß. Der Fertigungsaufwand ist insoweit nicht unerheblich, und für die Bereitstellung und Lagerhaltung der unterschiedlich ausgebildeten Armaturen ist ein entsprechend hoher Aufwand erforderlich.

Hiervon ausgehend liegt der Erfindung die Aufgabe zugrunde, die Armatur der genannten Art dahingehend weiterzubilden, daß mit geringem Aufwand Armaturen für unterschiedliche Einsatzbedingungen und Ausgestaltungen gefertigt und bereit gestellt werden können. Die Armatur soll einen funktionsgerechten Aufbau aufweisen und problemlos für den jeweils gewünschten Anwendungsfall ausgebildet werden können.

Die Lösung dieser Aufgabe erfolgt gemäß den im Patentanspruch 1 angegebenen Merkmalen.

Die erfindungsgemäße Armatur zeichnet sich durch einen einfachen Aufbau aus und kann nach Art eines Bausatzes für den jeweils gewünschten Anwendungsfall unter Beibehaltung des Gehäuses komplettiert werden. Es ist eine in den Stutzen einsetzbare Kartusche vorgesehen, welche die jeweils gewünschten Funktionselemente, wie Bohrer und / oder Ventilkörper, Dichtelemente oder dergleichen, enthält. Es sind miteinander korrespondierende Elemente zur Drehsicherung im Inneren des Stutzens und im Bereich der Außenfläche der Kartusche vorgesehen. Diese Elemente zur Drehsicherung können als Verzahnung oder als axiale Längsnut und als korrespondierender Steg der Kartusche und / oder der Innenfläche des Stutzens ausgebildet sein oder eine von der zylindrischen Form abweichende Kontur aufweisen, insbesondere polygonale Kontur der Stutzeninnenfläche und korrespondierende AuBenkontur der Kartusche oder als zur Stutzenachse parallele Abflachungen oder Führungsflächen ausgebildet sein. Ferner enthält das Armaturengehäuse Elemente zur axialen Sicherung der in Richtung der Stutzenachse in den Stutzen eingeschobenen Kartusche. Der Stutzen und die Kartusche sind ferner derart ausgebildet, daß die Kartusche in Richtung der Längsachse in den Innenraum des Stutzen einschiebbar ist, wobei die Einschubrichtung, und zwar bezogen auf die Längsachse der Armatur, wahlweise von innen weg von der Längsachse oder aber von außen in Richtung auf die Längsachse vorgesehen werden kann. Darüber hinaus kann im Rahmen der Erfindung die Armatur als ein Sattelstück ausgebildet sein, welches einen halbschalenartigen und auf die Außenfläche des Rohres aufsetzbaren Sattel aufweist, oder auch als Muffe ausgebildet sein, in welche das Rohr einzuschieben ist. Im letzteren Fall wird die Kartusche bevorzugt von der Außenseite radial nach innen in Richtung zur Längsachse in den Stutzen eingesetzt, wobei mittels einer Kappe oder dergleichen am äußeren Ende des Stutzens eine Sicherung der Kartusche im Stutzen erfolgt.

Weiterbildungen und besondere Ausgestaltungen der Erfindung sind in den Unteransprüchen sowie der weiteren Beschreibung angegeben.

Die Erfindung wird nachfolgend anhand des in der Zeichnung dargestellten Ausführungsbeispiels näher erläutert, ohne daß insoweit eine Beschränkung erfolgt.

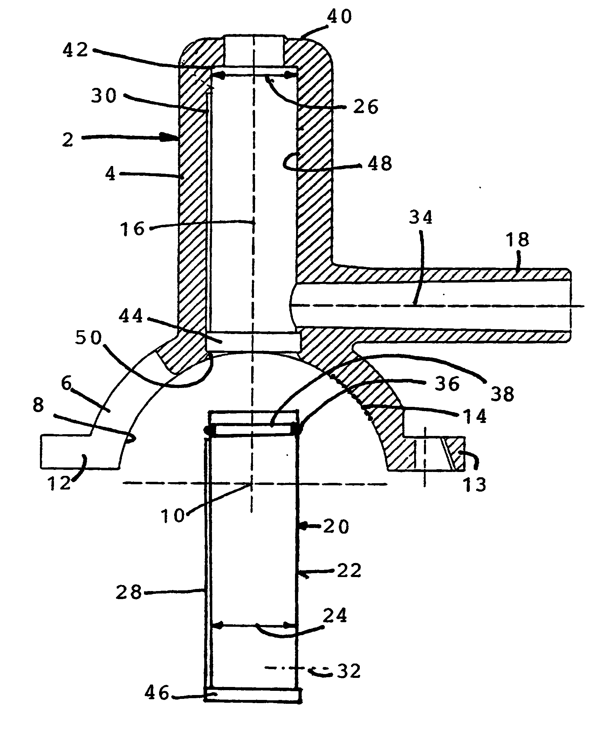

Fig. 1 zeigt einen Schnitt durch das Gehäuse 2 der Armatur, welches einen Stutzen 4 und einen näherungsweise als Halbschale ausgebildeten Sattel 6 enthält. Die Innenfläche 8 des Sattels 6 ist im wesentlichen koaxial zur Längsachse 10 der Armatur angeordnet. Mit der orthogonal zur Zeichenebene stehenden Längsachse 10 verläuft koaxial auch die Achse des hier nicht weiter dargestellten Rohres, auf dessen Außenfläche die Armatur mit der Innenfläche 8 aufgesetzt werden kann, wobei in bekannter Weise die Durchmesser der Außenfläche und der genannten Innenfläche 8 aufeinander abgestimmt sind. Zur Festlegung der Armatur bzw. des Gehäuses 2 auf dem Rohr ist eine Unterschelle vorgesehen, welche mit dem parallel zur Längsachse 10 verlaufenden Flanschen 12, 13 des Gehäuses bzw. des Sattels 6 verbindbar ist. Ferner enthält die Innenfläche 8 eine Heizwicklung 14, welche in bekannter Weise um die Achse 16 des Stutzens 4 bevorzugt als spiralartige Wicklung angeordnet ist. Des weiteren enthält das Gehäuse 2 einen mit dem Stutzen 4 verbundenen Abzweigstutzen 18 zum Anschluß einer Abzweigleitung.

Die erfindungsgemäße Armatur enthält femer eine Kartusche 20, welche in Richtung der Stutzenachse 16 in den Stutzen 4 einsetzbar ist, wobei in der Zeichnung der Stutzen vor dem Einsetzen dargestellt ist. Die Kartusche 20 enthält im Inneren hier nicht weiter dargestellte Funktionselemente, wie Bohrer, Ventilkörper, Ventilsitz, eine mit dem Abzweigstutzen 18 fluchtende Öffnung oder dergleichen, entsprechend dem jeweiligen Einsatzzweck der Armatur. Die Kartusche 20 besitzt insbesondere eine im wesentlichen zylindrische Außenfläche 22, deren Außendurchmesser 24 auf den Innendurchmesser 26 des Stutzens derart abgestimmt ist, daß einerseits die Kartusche 20 ohne weiteres in den Stutzen 4 eingeschoben werden kann und andererseits eine stabile Fixierung im Stutzen 4 gewährleistet ist. Zur Drehsicherung besitzt die Kartusche 20 an der Außenfläche einen radial vorstehenden Steg 28, mit welchem eine axiale Längsnut 30 im Stutzeninneren korrespondiert, wobei der Steg 28 nach dem Einsetzen der Kartusche 20 in den Stutzen 4 eingreift. Der Steg 28 und die Längsnut 30 bilden miteinander korrespondierende Elemente zur Drehsicherung und Vorgabe einer definierten Drehwinkelstellung der Kartusche 20 bezüglich des Stutzens 4, so daß insbesondere eine Öffnung 32 in der Kartusche 20 nach dem Einsetzen mit der Achse 34 des Abzweigstutzens 18 fluchtet. Ferner ist in zweckmäßiger Weise ein Dichtelement 36, insbesondere in Form eines Dichtringes, zwecks Abdichtung der Kartusche 20 bezüglich der Innenfläche des Stutzens 4 vorgesehen. Hierzu kann das Dichtelement 36 in eine Ringnut 38 der Kartusche angeordnet sein oder alternativ in einer hier nicht dargestellten Ringnut in der Innenfläche des Stutzens 4. Ferner kann im Rahmen der Erfindung das Dichtelement Bestandteil der Armatur und/oder der Kartusche sein. So kann die Innenfläche des aus Kunststoff bestehenden Stutzens beispielsweise einen radial nach innen gerichteten ringförmigen Wulst aufweisen oder die Außenfläche der Kartusche einen radial nach außen gerichteten ringförmigen Steg enthalten, welcher in das vergleichsweise weiche Material der Innenfläche des Stutzens eingepreßt wird. Durch eine spezielle Formgebung der Außenfläche der Kartusche und/oder der Innenfläche des Stutzens ist somit ein integriertes Dichtelement geschaffen.

Zur definierten axialen Positionierung der Kartusche 20 ist der Stutzen 4 an seinem gemäß Zeichnung oberen, freien Ende 40 mit einem radial nach innen gerichteten Bund 42 versehen, an welchem die Kartusche 20 nach dem Einsetzen anliegt. Des weiteren besitzt der Stutzen 4 bzw. das Gehäuse 2 im Bereich nahe der Innenfläche 48 eine ringförmige Erweiterung 44, mit welcher ein Ringbund 46 der Kartusche 20 korrespondiert, wobei dieser Ringbund 46 bevorzugt an dem der Längsachse 10 zugewandten Ende der Kartusche 20 angeordnet ist. Im Übergangsbereich zwischen der StutzenInnenfläche 48 und der Sattel-Innenfläche 8, bevorzugt anschließend an die ringförmige Erweiterung 4, ist ein Sicherungselement 50 für die Kartusche 20 bzw. deren Ringbund 46 zwecks Sicherung der axialen Positionierung der Kartusche 20 im Stutzen 4 vor gesehen. Das axiale Sicherungselement 50 ist derart ausgebildet und / oder elastisch, daß die Kartusche 20 beim Einsetzen an dem Sicherungselement 50 vorbeibewegbar ist.

In einer alternativen Ausgestaltung kann anstelle der Drehsicherungselemente 28, 30 die Kartusche eine Längsnut aufweisen, in welche ein radial nach innen gerichteter Steg des Stutzens eingreift. Ferner können die Elemente zur Drehsicherung durch eine Verzahnung oder eine polygonale Außenkontur, beispielsweise in Form eines Sechskants, der Kartusche 20 und eine entsprechend verzahnte oder polygonale Innenfläche des Stutzens 4 gebildet sein. Auch können die Elemente zur Drehsicherung als eine zur Stutzenachse 16 paralle, bevorzugt ebene Anlagefläche der Kartusche 20 ausgebildet sein, wobei diese Anlagefläche an einer korrespondierenden gleichfalls zur Stutzenachse 16 parallelen Führungsfläche zur Anlage gelangt. Desweiteren kann die Außenfläche der Kartusche 20 konisch ausgebildet sein und korrespondierend hierzu eine konische Innenfläche des Stutzens vorgesehen sein, wodurch eine sichere Abstützung und Fixierung der Kartusche im Stutzen gewährleistet ist.

In einer weiteren alternativen Ausgestaltung der Erfindung ist die Kartusche 20, bezogen auf die Längsachse 10 der Armatur, radial von außen her am freien Ende 40 des Stutzens in den Stutzen 4 einsetzbar, wobei in diesem Fall der oben erläuterte Bund 42 nicht vorgesehen ist. Vielmehr ist analog radial innen, insbesondere anstelle der Erweiterung 44, ein Ringbund angeordnet, während am freien Ende 40 ein mit dem erläuterten Sicherungselement 50 vergleichbares Sicherungselement vorgesehen ist. Auch kann am freien Ende 40 zusätzlich oder alternativ in diesem Fall eine mit dem Stutzen 4 verbindbarer Stützring oder eine Kappe oder dergleichen vorgesehen sein, um einen mit dem erläuterten Bund 42 vergleichbaren Anschlag zur Fixierung der Kartusche 20 zu bilden.

Darüber hinaus kann anstelle der erläuterten Ausbildung des Gehäuses 2 mit einem halbschalenförmigen Sattel 6 ein im wesentlichen zylindrischer Muffenkörper vorgesehen sein, in welchen das Rohr einschiebbar ist. In diesem Fall wird gemäß der vorstehend erläuterten Alternative die Kartusche zweckmäßig vom freien Ende 40 des Stutzens 4 her in diesen in Richtung auf die Längsachse 10 hin eingesetzt.

### Bezugszeichen

- 2: Gehäuse
- 4: Stutzen
- 6: Sattel
- 8: Innenfläche
- 10: Längsachse
- 12, 13: Flansch
- 14: Heizwicklung
- 16: Achse von 4
- 18: Abzweigstutzen
- 20: Kartusche
- 22: Außenfläche von 20
- 24: Außendurchmesser von 20
- 26: Innendurchmesser von 4
- 28: Steg an 20
- 30: Längsnut in 4
- 32: Öffnung in 20
- 34: Achse von 18
- 36: Dichtelement
- 38: Ringnut
- 40: freies Ende von 4
- 42: Bund
- 44: Erweiterung in 8
- 46: Ringbund von 20
- 48: Innenfläche von 4
- 50: Sicherungselement

## Patentansprüche

1. Armatur mit einem Gehäuse (2), welches mit einem Rohr verbindbar ist und welches einen Stutzen (4) und mit diesem verbundene, in einer Kartusche (20) angeordnete Funktionsteile enthält, wobei die Kartusche (20) in den genannten Stutzen (4) in Richtung seiner Stutzenachse (16) einsetzbar ist , wobei einerseits die Kartusche (20) und andererseits der Stutzen (4) miteinander korrespondierende Elemente (46, 50) zur Axialsicherung bezüglich der Stutzenachse (16) aufweisen,
**dadurch gekennzeichnet, dass** die Kartusche (20) undrehbar angeordnet ist und im Bereich der Innenfläche (48) des Stutzens (4) einerseits und im Bereich der Außenfläche der Kartusche (20) andererseits zu deren Drehsicherung miteinander korrespondierende Elemente (28, 30) vorgesehen sind, welche als Verzahnungen oder als axiale Längsnut (30) mit korrespondierendem Steg (28) oder als von einer zylindrischen Form abweichende Konturen der Innenfläche des Stutzens (4) und der Außenfläche der Kartusche (20) ausgebildet sind,
dass der Stutzen (4) an seinem freien, von der Längsachse (10) der Armatur abgewandten Ende (40) als weiteres Element zur axialen Sicherung der Kartusche (20) einen radial nach innen gerichteten Bund (42) oder eine mit dem freien Ende (40) verbundene Kappe aufweist, wobei die Kartusche (20) an dem Bund (42) oder der einen Anschlag bildenden Kappe anliegt,
und dass das Gehäuse (2) in bekannter Weise einen Sattel (6) oder eine Muffe mit einer Heizwicklung (14) zur Verbindung durch Elektroschweißen mit dem Rohr aufweist.

2. Armatur nach Anspruch 1, **dadurch gekennzeichnet, dass** der Stutzen (4) an seinem einer Längsachse (10) der Armatur zugewandten Ende eine insbesondere ringförmige Erweiterung (44) enthält, in welche ein radial nach außen gerichteter Ringbund (46) der Kartusche (20) eingreift.

3. Armatur nach Anspruch 1 oder 2, **dadurch gekennzeichnet, dass** der Stutzen (4) an seinem der Längsachse (10) zugewandten Ende ein zumindest teilweise elastisch nachgiebiges Sicherungselement (50) zur axialen Sicherung der Kartusche (20) aufweist, wobei die Kartusche (20) in Richtung von der Längsachse (10) her in den Stutzen (4) eingesetzt ist.

4. Armatur nach Anspruch 1 oder 2, **dadurch gekennzeichnet, dass** die Kartusche (20) von innen in Richtung weg von der Längsachse (10) nach außen in Richtung auf das freie Ende (40) in den Stutzen (4) eingesetzt ist.

5. Armatur nach einem der Ansprüche 1 bis 4, **dadurch gekennzeichnet, dass** zwischen der Kartusche (20) und dem Stutzen (4) wenigstens ein Dichtelement (36) angeordnet ist und / oder dass das Dichtelement (36) in einer Ringnut (38) der Kartusche (20) oder des Stutzens (4) angeordnet ist.

## Claims

1. Fitting comprising a housing (2), which may be connected to a tube and which contains a connecting piece (4) and functional parts, which are connected to said connecting piece and are arranged in a cartridge (20), wherein the cartridge (20) may be inserted into the aforementioned connecting piece (4), in the direction of the axis (16) of said piece, both the cartridge (20) and the connecting piece (4) comprising mutually corresponding elements (46, 50) for axial retention with respect to the axis (16) of the connecting piece, **characterised in that** the cartridge (20) is arranged non-rotationally and mutually corresponding elements (28, 30), which are configured as teeth or as an axial longitudinal groove (30) comprising a corresponding web (28) or as non-cylindrical contours of the internal surface of the connecting piece (4) and the external surface of the cartridge (20), are provided both in the region of the internal surface (48) of the connecting piece (4) and in the region of the external surface of the cartridge (20) to prevent the cartridge from rotating, **in that** the connecting piece (4) comprises at its free end (40), which is remote from the longitudinal axis (10) of the fitting, a radially inwardly directed collar (42) or a cap connected to the free end (40), as a further element for the axial retention of the cartridge (20), the cartridge (20) being adjacent to the collar (42) or the cap, which forms a stop, and **in that** the housing (2) comprises in a known manner a saddle (6) or a sleeve comprising a heating coil (14) for connecting to the tube by means of electric welding.

2. Fitting according to claim 1, **characterised in that** the connecting piece (4) contains, at its end facing a longitudinal axis (10) of the fitting, an extension (44), in particular an annular extension, with which a radially outwardly directed annular collar (46) of the cartridge (20) engages.

3. Fitting according to either claim 1 or claim 2, **characterised in that** the connecting piece (4) comprises, at its end facing the longitudinal axis (10), an at least partially resiliently compliant retaining element (50) for the axial retention of the cartridge (20), the cartridge (20) being inserted into the connecting piece (4) in the direction from the longitudinal axis (10).

4. Fitting according to either claim 1 or claim 2, **characterised in that** the cartridge (20) is inserted into the connecting piece (4) from the inside in the direction away from the longitudinal axis (10) to the outside in the direction toward the free end (40).

5. Fitting according to any one of claims 1 to 4, **characterised in that** at least one sealing element (36) is arranged between the cartridge (20) and the connecting piece (4), and/or **in that** the sealing element (36) is arranged in an annular groove (38) in the cartridge (20) or the connecting piece (4).

## Revendications

1. Accessoire de plomberie avec un boîtier (2), qui peut être relié à un tuyau et qui comprend un embout (4) et des parties fonctionnelles reliées à celui-ci et placées dans une cartouche (20), la cartouche (20) pouvant être insérée dans ledit embout (4) dans la direction de son axe d'embout (16), la cartouche (20) d'une part et l'embout (4) d'autre part présentant des éléments (46, 50) mutuellement correspondants en vue d'une immobilisation axiale par rapport à l'axe (16) de l'embout,
***caractérisé en ce que*** la cartouche (20) est montée immobile en rotation et, au niveau de la surface intérieure (48) de l'embout (4) d'une part, et au niveau de la surface extérieure de la cartouche (20) d'autre part, il est prévu pour leur immobilisation en rotation des éléments (28, 30) mutuellement correspondants, qui sont conformés en dentures ou en rainure longitudinale axiale (30) avec une barre correspondante (28) ou en contours de forme non cylindrique pour la surface intérieure de l'embout (4) et pour la surface extérieure de la cartouche (20),
***en ce que*** l'embout (4) présente à son extrémité libre (40) opposée à l'axe longitudinal (10) de l'accessoire, comme autre élément d'immobilisation axiale de la cartouche (20), une collerette (42) orientée radialement vers l'intérieur ou un capuchon relié à l'extrémité libre (40), la cartouche (20) s'appuyant sur la collerette (42) ou sur le capuchon formant une butée,
et ***en ce que*** le boîtier (2) présente de manière connue une selle (6) ou un manchon avec un filament chauffant pour l'assemblage par soudage électrique avec le tuyau.

2. Accessoire de plomberie selon la revendication 1, ***caractérisé en ce que*** l'embout (4) comprend à son extrémité orientée vers un axe longitudinal (10) de l'accessoire un élargissement (44) en particulier annulaire, dans lequel s'engage une collerette (46) de la cartouche (20) orientée radialement vers l'extérieur.

3. Accessoire de plomberie selon la revendication 1 ou 2, ***caractérisé en ce que*** l'embout (4) présente à son extrémité orientée vers l'axe longitudinal (10) un élément d'immobilisation (50) au moins partiellement souple élastiquement pour l'immobilisation axiale de la cartouche (20), la cartouche (20) étant insérée dans l'embout (4) dans une direction depuis l'axe longitudinal (10).

4. Accessoire de plomberie selon la revendication 1 ou 2, ***caractérisé en ce que*** la cartouche (20) est insérée dans l'embout (4) depuis l'intérieur dans une direction s'écartant de l'axe longitudinal (10) vers l'extérieur en direction de l'extrémité libre (40).

5. Accessoire de plomberie selon l'une quelconque des revendications 1 à 4, ***caractérisé en ce* qu'**entre la cartouche (20) et l'embout (4) est placé au moins un élément d'étanchéité (36) et/ou ***en ce que*** l'élément d'étanchéité (36) est placé dans une rainure annulaire (38) de la cartouche (20) ou de l'embout (4).
